# EUROPÄISCHE PATENTSCHRIFT

(11) **EP 1 020 259 B1**
(45) Veröffentlichungstag und Bekanntmachung des Hinweises auf die Patenterteilung: **07.05.2003**
(21) Anmeldenummer: 00100566.9
(22) Anmeldetag: 12.01.2000
(51) Int. Cl.: B25J 15/06, B65G 47/91

(54) **Werkstückgreifer und Verfahren zu seiner Herstellung**
Gripper for workpieces and process for manufacturing thereof
Dispositif de préhension de pièces et son procédé de fabrication

(30) Priorität: 14.01.1999 DE 19901152
(43) Veröffentlichungstag der Anmeldung: 19.07.2000
(73) Patentinhaber: Bilsing Automation GmbH, 57439 Attendorn (DE)
(72) Erfinder: Bilsing, Alfred, 57439 Attendorn (DE)
(74) Vertreter: Jochem, Bernd, Dipl.-Wirtsch.-Ing.

(56) Entgegenhaltungen:
- DE-A- 4 442 137
- FR-A- 2 566 310
- US-A- 4 623 296

## Beschreibung

Die Erfindung bezieht sich auf Werkstückgreifer mit an Rohren und/oder Stangen befestigten Greifwerkzeugen, insbesondere zum Halten von Karosserieteilen im Kraftfahrzeug-Rohbau sowie auf ein Verfahren zur Herstellung solcher Werkstückgreifer.

Die im Kraftfahrzeug-Rohbau eingesetzten Werkstückgreifer müssen die Karosserieteile während des Schweißens sehr genau in einer bestimmten Stellung halten und gegebenenfalls in die richtige Form bringen. Daher müssen sie selbst sehr präzise gefertigt werden. Außerdem sollten sie ebenfalls aus Gründen der Genauigkeit dauerhaft formstabil, aber andererseits wegen der Anbringung an einem gesteuert bewegbaren Roboterarm möglichst leicht sein.

Um den genannten Anforderungen zu genügen, werden die Werkstückgreifer für den Kraftfahrzeug-Rohbau bisher als Schweißkonstruktionen im wesentlichen aus Vierkantrohr hergestellt. Die geschweißten Werkstückgreifer müssen auf großen, sehr teuren, mehrachsigen CNC-Maschinen gefräst werden. Kommt es bei den Bewegungen der Roboterarme zu einem Zusammenstoß, bei dem der Werkstückgreifer verbogen wird, kann er in der Regel nicht repariert, sondern muß ausgewechselt werden. Damit nicht als Folge solcher Unfälle die Kraftfahrzeug-Produktion längere Zeit unterbrochen wird, muß für jeden Greifer ständig ein ebensolcher Ersatzgreifer bereitstehen. In Anbetracht der großen Zahl der Karosserieteile brauchen die sperrigen Reserve-Greifer viel Platz und führen zur Verdoppelung der Investitionssumme für die Werkzeugausrüstung der Roboter.

Verschraubte Werkstückgreifer sind z.B. aus FR 2 566 310 A und US 4 623 296 A vorbekannt.

Der Erfindung liegt die Aufgabe zugrunde, einen Werkstückgreifer der eingangs genannten Art zu schaffen, der sich ebenfalls sehr genau, aber viel einfacher, schneller und kostengünstiger herstellen läßt und insbesondere geeignet ist, die Kosten für Reparaturen und Ersatzgreifer drastisch zu senken.

Vorstehende Aufgabe wird erfindungsgemäß durch einen Werkstückgreifer gemäß den Merkmalen des Anspruchs 1 gelöst.

Bei der Herstellung des vorgeschlagenen Werkstückgreifers wird erfindungsgemäß so vorgegangen, daß kreisrunde Rohre und/oder Stangen und zu ihrer Verbindung miteinander und mit den Greifwerkzeugen durch Schrauben zu spannende Klemmstücke benutzt werden, die in jedem Klemmbereich mit wenigstens einer sich im wesentlichen radial erstreckenden Positionierbohrung versehen sind, daß die Rohre und/oder Stangen an denjenigen Stellen, an denen sich in der vorbestimmten Anordnung des fertigen Zustands des Werkstückgreifers die Positionierbohrungen befinden, mit einer fluchtenden Gegenbohrung versehen werden, daß die Rohre, Klemmstücke und Greifwerkzeuge zusammengefügt, durch in die Positionierbohrungen und die jeweils zugeordneten Gegenbohrungen eingesetzte Stifte ausgerichtet und in dieser Lage durch Anziehen der Schrauben der Klemmstücke reibschlüssig miteinander verbunden werden, und daß anschließend die Stifte wieder entfernt werden.

Die Erfindung bietet zunächst den Vorteil, daß zur Bearbeitung der Rohre für die Herstellung der Werkstückgreifer der Einsatz einer kleinen, zweiachsigen CNC-Bohrmaschine genügt, die an vorbestimmten Stellen der Rohre radiale Bohrungen von z.B. 4 mm Durchmesser anbringt.

Überraschend ist die Feststellung, daß das erfindungsgemäße Prinzip, Formschluß durch Stiftverbindungen nur bei der exakten Montage der Werkstückgreifer vorzusehen, ihn danach in einem besonderen Arbeitsgang wieder zu beseitigen und dann mit bloß reibschlüssig zusammengehaltenen Werkstückgreifern zu arbeiten, trotz der hohen Präzisionsanforderungen soliden Schweißkonstruktionen vorzuziehen ist. Letztere werden schon bei verhältnismäßig harmlosen Stößen vollständig zerstört, wenn diese zu Verformungen führen. Demgegenüber können bei dem erfindungsgemäßen Werkstückgreifer die Reibschlußverbindungen unter stoßartigen Belastungen nachgeben, so daß bei kleineren Havarien, die bereits eine Verformung geschweißter Werkstückgreifer zur Folge hätten, keine dauerhaften Schäden auftreten. Es genügt, den neuen Werkstückgreifer mittels der zueinander passenden Stifte und Löcher in den Klemmstücken und Rohren wieder zu justieren, und dann kann mit ihm weitergearbeitet werden.

Im Falles eines größeren Crashs können sich auch einzelne Rohre verbiegen. Dann brauchen aber nur diese, nicht der gesamte Werkstückgreifer, ausgewechselt zu werden. Daraus folgt der weitere Vorteil, daß nicht ein zusätzlicher Satz sperriger Werkstückgreifer vorrätig gehalten werden muß, sondern nur eine Gruppe vorgebohrter Rohre. Die Investitionskosten für einen erfindungsgemäßen Werkstückgreifer betragen je nach Gestaltung ohnehin nur etwa 50 bis 60 % der Kosten eines entsprechenden geschweißten Greifers. Insgesamt kann jedoch die zu erzielende Einsparung wesentlich größer sein, weil die Herstellungskosten der Sicherheitsreserve aus Rohren nur etwa 10 bis 20 % der Kosten eines vollständigen Reservesatzes an Werkstückgreifern ausmachen.

Die Erfindung wird nachstehend anhand von in der Zeichnung dargestellten Ausführungsbeispielen näher erläutert. Es zeigen:
- Fig. 1: eine Draufsicht auf einen Werkstückgreifer für den Kraftfahrzeug-Rohbau;
- Fig. 2A, B: eine Stirnansicht und eine Draufsicht eines bei dem Werkstückgreifer gemäß Fig. 1 eingesetzten Auslegerklemmblocks;
- Fig. 3A, B: Stirnansicht und Seitenansicht eines einen Teil des Werkstückgreifers nach Fig. 1 bildenden Schwenkarms;
- Fig. 4A, B, C: einen Klemmblock mit sich kreuzenden Achsen in drei Ansichten;
- Fig. 5A, B: Seitenansichten eines Parallel-Klemmblocks und
- Fig. 6A, B: Seitenansicht und Endansicht eines Kreuz-Baumadapters.

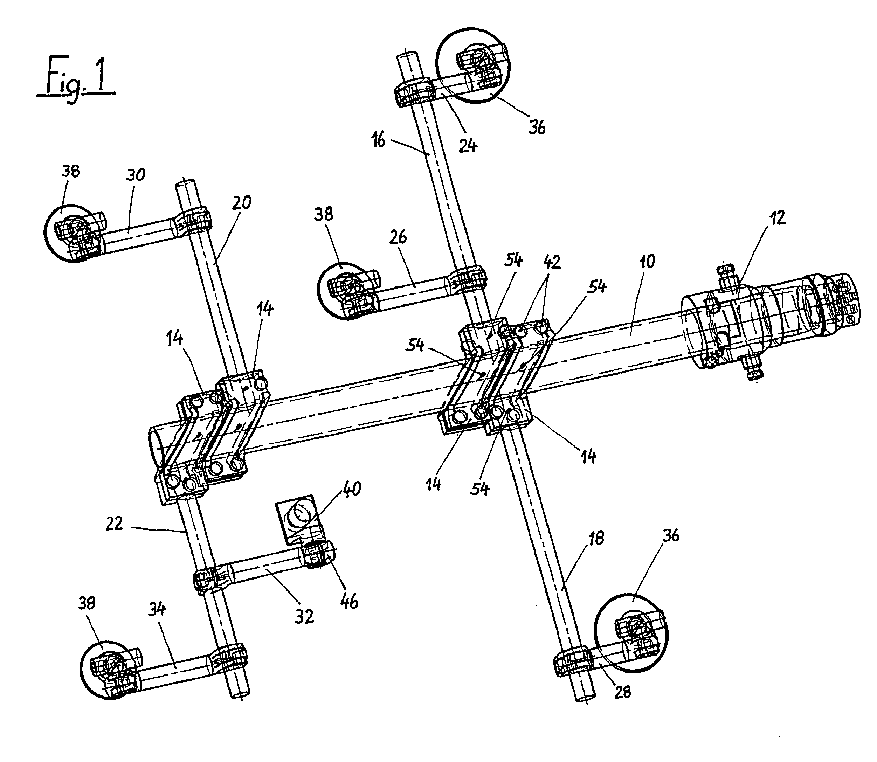

Der in Fig. 1 gezeigte Werkstückgreifer für den Kraftfahrzeug-Rohbau hat als tragendes Teil einen Auslegerbaum 10 in Form eines kreisrunden Aluminiumrohrs mit einem Außendurchmesser von z.B. 60 mm. An seinem einen Ende ist ein Bajonettstück 12 fest angebracht, welches Teil einer Schnellkupplung ist, über die der Werkstückgreifer mit einem Roboterarm oder z.B. einer festen Halterung zu verbinden ist.

An dem Auslegerbaum 10 sind mittels Auslegerklemmblöcke 14 im Beispielsfall vier Auslegeräste 16, 18, 20, 22 befestigt. Diese tragen wiederum Kreuz-Baumadapter oder Schwenkarme 24, 26, 28, 30, 32 und 34, an deren freien Enden z.B. über Kreuz-Klemmblöcke oder Parallel-Klemmblöcke verschiedene Greifwerkzeuge 36, 38, 40 angebracht sind. Bei den Greifwerkzeugen kann es sich z.B. um Saugnäpfe oder durch pneumatische Kraftzylinder betätigbare, mechanische Zwei-Achsen-Greifer handeln.

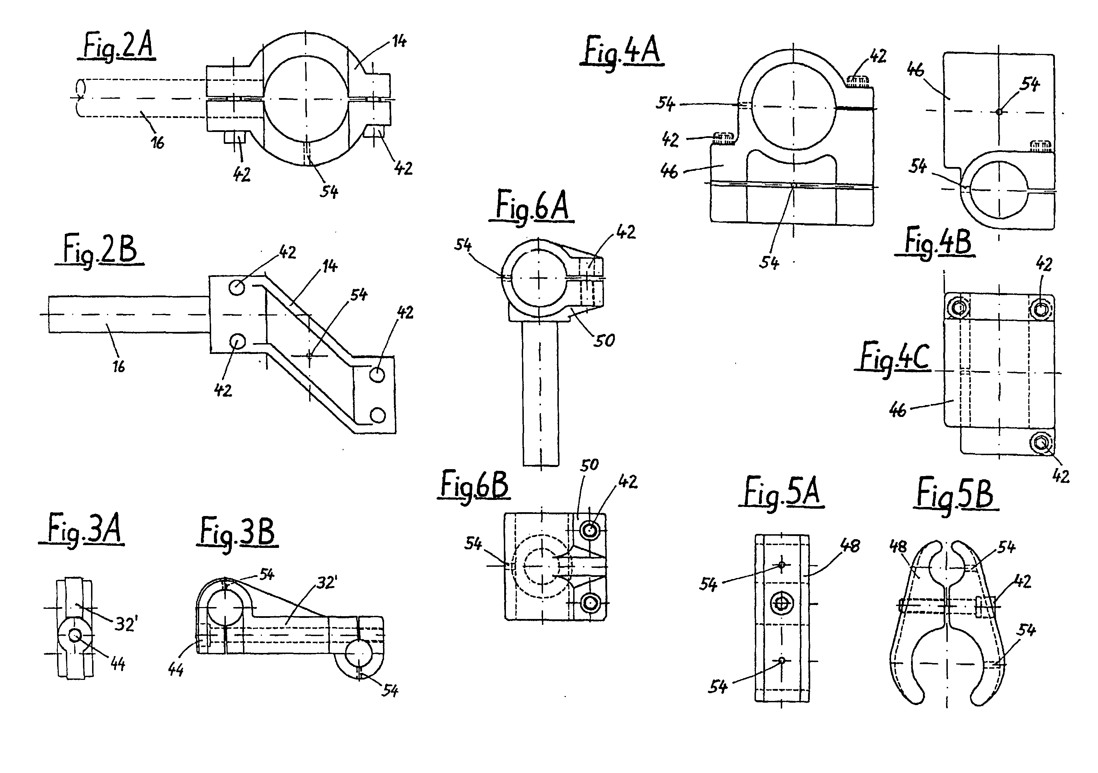

Einige der genannten Verbindungsteile zwischen dem Auslegerbaum 10, seinen Ästen 16, 18, 20, 22 und den Greifwerkzeugen 36, 38 40 sind in den Fig. 2 bis 6 in größerem Maßstab dargestellt. So ist z.B. in Fig. 2A, B ein Auslegerklemmblock 14 gezeigt. Er besteht aus einem sich schräg zu seiner Mittellängsachse erstreckenden geteilten Ring mit einem zum Außendurchmesser des Auslegerbaums 10 passenden Innendurchmesser. Der geteilte Ring kann mittels vier Klemmschrauben 42 an beliebiger Stelle auf dem Auslegerbaum 10 festgeklemmt werden. Durch zwei dieser Schrauben wird auch das Ende eines mit seiner Längsachse die Mittellängsachse des Auslegerbaums 10 schneidenden Auslegerasts 16 in einer passenden zylindrischen Erweiterung der Teilungsfuge des Rings festgeklemmt. Wie Fig. 1 zeigt, kann der geteilte Ring so schräg zu seiner Mittellängsachse sein, daß bei zwei nebeneinander angeordneten Auslegerklemmblöcken 14 die darin jeweils geklemmt gehaltenen Auslegeräste 16, 18 fluchten.

Fig. 3A, B zeigt einen als Klemmstück ausgebildeten, mit 32' bezeichneten Schwenkarm mit im Abstand zueinander parallel liegenden Bohrungen. Die Bohrungsaugen sind durch ein seitlich versetztes schaftförmiges, hohles Mittelteil miteinander verbunden. Der Schaft ist unmittelbar angrenzend an die Bohrungen geschlitzt. Mittels einer langen, sich durch den Schaft erstreckenden Schraube 44 können gleichzeitig die Schlitze an beiden Bohrungsaugen verkleinert und dadurch in den Bohrungen sitzende Rohre oder Stangen geklemmt werden. Der in Fig. 3A, B gezeigte Schwenkarm 32 hat im Gegensatz zu den anderen hier beschriebenen Klemmstücken den Vorzug, daß eine einzige, lange Spann- oder Klemmschraube 44 genügt, um beide reibschlüssigen Verbindungen festzuziehen.

Im Gegensatz zu Fig. 3A, B zeigen die Fig. 4A, B, C einen Klemmblock 46, bei dem mit drei Klemmschrauben 42 zwei geschlitzte ringförmige Fassungen für Rohre oder Stangen mit sich kreuzenden Achsen geklemmt werden können. Der Klemmblock 46 kann z.B. bei dem Werkstückgreifer nach Fig. 1 zur Verbindung eines rohrförmigen Schwenkarms 26, 28, 30, 32 mit einem Auslegerast 16, 18, 20, 22 oder mit einem Greifwerkzeug 36, 38, 40 dienen.

Ebenfalls als Greiferaufnahme kann der in Fig. 5A, B gezeigte Parallel-Klemmblock 48 verwendet werden. Es handelt sich um eine zweiteilige starre Klemmschelle mit zwei Fassungen für Stangen, Rohre oder Zapfen, deren Mittellängsachsen parallel liegen und im Beispielsfall unterschiedliche Durchmesser haben. Zwischen den beiden Fassungen verbindet eine Klemmschraube 42 die beiden Hälften. Der in Fig. 6A, B gezeigte Kreuz-Baumadapter 50 besteht aus einer durch zwei Klemmschrauben 42 zu klemmenden, geteilten, ringförmigen Fassung für ein passendes Rohr oder eine Stange. Mit der Fassung ist in einstückiger Ausbildung ein zylindrischer Zapfen 52 verbunden, an dem wiederum Klemmstücke angesetzt werden können.

Es versteht sich, daß weitere derartige Klemmstücke mit einer oder mehreren Klemmfassungen vorgesehen sein können, um die Rohre und Stangen von daraus aufgebauten Werkstückgreifern zu verbinden. Die Besonderheit der Klemmstücke besteht darin, daß sich jeweils am Umfang jeder Klemmfassung an einer bestimmten Stelle mindestens eine radiale Bohrung 54 befindet. Vorzugsweise liegt sie mit Bezug auf die Mittellängsachse der Klemmfassung deren Schlitz diametral gegenüber, sofern nur ein Schlitz vorhanden ist. Bei zweiteiligen Klemmfassungen gemäß Fig. 2 und 5 befindet sich die radiale Bohrung 54 in der Mitte einer der Bügelhälften. Der Durchmesser der Bohrungen 54 kann z.B. 4 mm betragen.

Bei der Herstellung eines Werkstückgreifers nach Fig. 1 werden auch die Rohre oder Stangen 10, 16 - 22, 24 - 34 an bestimmten Stellen mit radialen Löchern von z.B. 4 mm Durchmesser gebohrt, und zwar exakt an denjenigen Stellen, an denen sich im fertig montierten Zustand die Positionierbohrung der an dieser Stelle das Rohr bzw. die Stange umfassenden Klemmfassung des betreffenden Klemmstücks gemäß Fig. 2 bis 6 befindet. Gegebenenfalls kann der Werkstückgreifer auch so hergestellt werden, daß seine Rohre und Stangen sowie die Greifwerkzeuge in die richtige Anordnung gebracht werden und dann durch die Positionierbohrungen 54 in den Klemmstücken hindurch fluchtende radiale Gegenbohrungen in den Rohren oder Stangen angebracht werden.

Bei der Montage und Justierung der mit Positionierbohrungen 54 versehenen Klemmstücke und entsprechend gebohrten Rohre und Stangen werden passende Stifte in die Positionierbohrungen 54 und die mit ihnen fluchtenden Gegenbohrungen in den Rohren bzw. Stangen eingesetzt. In diesem durch formschlüssigen Eingriff gesicherten Zustand werden dann die Klemmschrauben 42 bzw. 44 fest angezogen und dadurch die Einzelteile des Werkstückgreifers reibschlüssig miteinander verbunden. Nach einer Probe werden dann allerdings die Stifte aus den Positionierbohrungen 54 und den entsprechenden Gegenbohrungen in den Stangen und Rohren wieder entfernt, so daß nur noch die Reibschlußverbindungen vorhanden sind. Diese sollten vorzugsweise nur so fest angezogen sein, wie es erforderlich ist, damit der Werkstückgreifer seine Haltefunktion erfüllen kann. Zu festes Anziehen der Klemmverbindungen kann sogar schädlich sein, denn nach Möglichkeit möchte man erreichen, daß sich bei einem Crash während des Betriebs nur die reibschlüssig miteinander verbundenen Teile relativ zueinander bewegen. Wenn Verformungen ausbleiben, können die Rohre und Stangen unter Zuhilfenahme der Positionier- und Gegenbohrungen sehr einfach und schnell wieder in die richtige gegenseitige Lage gebracht, erneut verstiftet und festgezogen werden.

Selbstverständlich kann es auch bei dem vorgeschlagenen Werkstückgreifer vorkommen, daß sich bei einem Crash ein oder mehrere Rohre oder Stangen verbiegen. Dann brauchen aber lediglich die beschädigten Rohre und Stangen ausgewechselt zu werden. Es ist daher nicht erforderlich, sicherheitshalber zusätzlich zu jedem Werkstückgreifer noch eine zweite, identische Ausführung für den Notfall bereitzuhalten.

## Patentansprüche

1. Werkstückgreifer mit an Rohren und/oder Stangen befestigten Greifwerkzeugen, insbesondere zum Halten von Karosserieteilen im Kraftfahrzeug-Rohbau, wobei kreisrunde Rohre (10, 16 - 22, 24 - 34) und/oder Stangen durch mittels Schrauben (42, 44) zu spannende Klemmstücke (14, 32', 46 - 50) reibschlüssig miteinander und mit den Greifwerkzeugen (36, 38, 40) verbunden sind, **dadurch gekennzeichnet, daß** die Relativstellung der einzelnen Rohre (10, 16 - 22, 24 - 34) bzw. Stangen und der jeweils mit ihnen verbundenen Klemmstücke (14, 32', 46 - 50) durch von außen zugängliche, fluchtende Bohrungen (54) in den Rohren bzw. Stangen und den Klemmstücken bestimmt ist.

2. Verfahren zur Herstellung von Werkstückgreifern nach Anspruch 1 aus Rohren und/oder Stangen und Greifwerkzeugen, insbesondere zum Halten von Karosserieteilen im Kraftfahrzeug-Rohbau, wobei kreisrunde Rohre (10, 16 - 22, 24 - 34) und/oder Stangen und zu ihrer Verbindung miteinander und mit den Greifwerkzeugen (36, 38, 40) durch Schrauben (42, 44) zu spannende Klemmstücke (14, 32', 46, 48, 50) benutzt werden, die in jedem Klemmbereich mit wenigstens einer sich im wesentlichen radial erstreckenden Positionierbohrung (54) versehen sind, wobei die Rohre (10, 16 - 22, 24 - 34) und/oder Stangen an denjenigen Stellen, an denen sich in der vorbestimmten Anordnung des fertigen Zustands des Werkstückgreifers die Positionierbohrungen (54) befinden, mit einer fluchtenden Gegenbohrung versehen werden, wobei die Rohre, Klemmstücke und Greifwerkzeuge zusammengefügt, durch in die Positionierbohrungen und die jeweils zugeordneten Gegenbohrungen eingesetzte Stifte ausgerichtet und in dieser Lage durch Anziehen der Schrauben der Klemmstücke reibschlüssig miteinander verbunden werden, und wobei anschließend die Stifte entfernt werden.

## Claims

1. A workpiece gripper with gripping tools fastened to tubes and/or rods, in particular for holding body parts in automobile construction, wherein circular tubes (10,16-22,24-34) and/or rods are joined together with frictional resistance by clamping members (14,32',46-50) to be tightened by means of screws (42,44) and are connected to the gripping tools (36,38,40), **characterised in that** the relative position of the individual tubes (10,16-22,24-34) or rods and of the clamping members (14,32',46-50) respectively connected thereto is determined by externally accessible aligned bores (54) in the tubes or rods and in the clamping members.

2. A method of producing workpiece grippers according to Claim 1 from tubes and/or rods and gripping tools, in particular for holding body parts in automobile construction, wherein circular tubes (10,16-22,24-34) and/or rods and clamping members (14,32',48,50), which are intended to join them together and to the gripping tools (36,38,40) and to be tightened by screws, are used, which clamping members are provided in each clamping zone with at least one substantially radially extending locating bore (54), wherein at those locations at which in the predetermined arrangement of the finished condition of the workpiece gripper the locating bores (54) are situated the tubes (10,16-22,24-34) and/or rods are provided with an aligned counterbore, wherein the tubes, clamping members and gripping tools joined together are aligned by pins inserted into the locating bores and the counterbores respectively associated therewith, and in this position are joined together with frictional resistance by tightening the screws of the clamping members, and wherein the pins are subsequently removed.

## Revendications

1. Dispositif de préhension de pièces avec, fixés sur des tubes et/ou des barres, des outils de saisie destinés notamment à maintenir des parties de carrosserie dans l'assemblage de véhicules automobiles, ces tubes et/ou ces barres à section circulaire (10, 16-22, 24-34) étant reliés avec verrouillage par friction, entre eux et à des outils de saisie, par des pièces de serrage (14, 32', 46-50) pouvant être serrées au moyen de vis (42, 44),
**caractérisé en ce que**
la position relative des tubes individuels (10, 16-22, 24-34) ou des tiges et des pièces de serrage (14, 32', 46-50) qui leur sont reliées est définie par des perçages (54), alignés, accessibles de l'extérieur, pratiqués dans les tubes ou tiges et dans les pièces de serrage.

2. Procédé pour fabriquer des dispositifs de préhension de pièces selon la revendication 1, à partir de tubes et/ou de barres et d'outils de saisie destinés notamment à maintenir des parties de carrosserie dans l'assemblage de véhicules automobiles, selon lequel
on utilise des tubes et/ou des barres à section circulaire (10, 16-22, 24-34) ainsi que des pièces de serrage (14, 32', 46, 48, 50) pouvant être serrées par des vis (42, 44) pour relier avec verrouillage par friction, les tiges ou barres entre elles et avec les outils de saisie (36, 38, 40), chaque pièce de serrage présentant, dans sa zone de serrage, au moins un perçage de positionnement (54),
- les tubes (10, 16-22, 24-34) et/ou les barres, aux endroits où se trouvent les perçages de positionnement (54) quand le dispositif de préhension occupe la position prédéfinie correspondant à son état final, sont équipés d'un contreperçage aligné,
- les tubes, pièces de serrage et outils de prise sont assemblés en introduisant des broches dans les perçages de position et les contre-perçages correspondants puis, dans cette position, sont reliés entre eux avec verrouillage par friction en vissant les vis des pièces de serrage, et
- enfin les broches sont retirées.
